# EUROPEAN PATENT APPLICATION

(11) **EP 4 611 430 A1**
(43) Date of publication of application: **03.09.2025**
(21) Application number: 22963195.7
(22) Date of filing: 28.10.2022
(51) Int. Cl.: H04W 36/00, H04B 17/309, H04L 27/00

(54) **DATA PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Stöckeler, Ferdinand
(86) International application number: PCT/CN2022/128402
(87) International publication number: WO 2024/087214

(57) **Abstract**

Embodiments of the present disclosure provide a data processing method and apparatus, a communication device, and a storage medium. A data processing apparatus executed by a UE may comprise: sending beam measurement results of N cells to a network device of a serving cell, wherein the N cells comprise at least one candidate cell; and N is a positive integer. The method provided by the present disclosure allows a network device to obtain a beam measurement result for a candidate cell, so as to help determine cell dynamic handover of UE.

## Description

### TECHNICAL FIELD

The present disclosure relates to, but is not limited to, the field of wireless communication technology, and in particular relates to a method and an apparatus for data processing, a communication device, and a storage medium.

### BACKGROUND

With the development of communication technology, Layer 1/Layer 2 based inter-cell mobility measurement is introduced, and it is hoped that a measurement result can be used to realize the cell handover judgment for a user equipment (UE), to reduce the latency of the cell handover process, and to better deal with the mobility problem of the UE.

For this reason, the UE will also measure neighboring cells when performing the aforementioned Layer 1/Layer 2 measurements, and will report the measurement results of the neighboring cells for use in the determination of whether or not the serving cell of the UE is to be switched.

### SUMMARY

Embodiments of the present disclosure provide a method and an apparatus for data processing, a communication device, and a storage medium.

A first aspect of embodiments of the present disclosure provides a method for data processing, which is performed by a UE and includes: sending beam measurement results of N cells to a network device of a serving cell, in which the N cells include at least one candidate cell, and N is a positive integer.

A second aspect of embodiments of the present disclosure provides a method for data processing, which is performed by a network device of a serving cell and includes: receiving beam measurement results of N cells sent by a user equipment (UE), in which the N cells include at least one candidate cell, and N is a positive integer.

A third aspect of embodiments of the present disclosure provides an apparatus for data processing, which includes: a transmitting module configured to send beam measurement results of N cells to a network device of a serving cell, in which the N cells include at least one candidate cell, and N is a positive integer.

A fourth aspect of embodiments of the present disclosure provides an apparatus for data processing, which includes: a receiving module configured to receive beam measurement results of N cells sent by a user equipment (UE), in which the N cells include at least one candidate cell, and N is a positive integer.

A fifth aspect of embodiments of the present disclosure provides a communication device including: a processor, a transceiver, a memory and an executable program stored in the memory and executable by the processor, in which the processor, when executing the executable program, performs the method for data processing according to the first aspect or the second aspect.

A sixth aspect of embodiments of the present disclosure provides a computer storage medium storing an executable program that when executed by a processor, causes the method for data processing according to the first aspect or the second aspect to be implemented.

A seventh aspect of embodiments of the present disclosure provides a communication system including: a user equipment (UE) configured to perform the method for data processing according to the first aspect; and a network device configured to perform the method for data processing according to the second aspect.

In the technical solutions provided by embodiments of the present disclosure, in embodiments of the present disclosure, the UE will send the beam measurement results of the N cells to the network device of the serving cell, and the N cells at least includes one candidate cell. Thus, the network device of the serving cell may rapidly determine whether the UE needs to perform the cell handover according to the beam measurement results, and a target cell to which it needs to switch if it needs to perform the cell handover, enabling the network device such as a base station to obtain the beam measurement result of the candidate cell to facilitate making a decision on the dynamic switching of the UE cell.

It should be understood that the forgoing general description and the detailed description below are only illustrative and explanatory, and cannot limit embodiments of the present disclosure.

### BRIEF DESCRIPTION OF THE DRAWINGS

The accompanying drawings herein are incorporated into the specification and constitute a part of the specification. Theses accompanying drawings illustrate embodiments conform to the present disclosure and are used to explain the principles of embodiments of the present disclosure together with the specification.
FIG. 1 is a schematic diagram of a wireless communication system illustrated according to an illustrative embodiment.
FIG. 2 is a flow chart of a method for data processing illustrated according to an illustrative embodiment.
FIG. 3 is a schematic diagram of a serving cell and neighboring cells illustrated according to an illustrative embodiment.
FIG. 4 is a flow chart of a method for data processing illustrated according to an illustrative embodiment.
FIG. 5 is a flow chart of a method for data processing illustrated according to an illustrative embodiment.
FIG. 6 is a schematic diagram of reporting of beam measurement results illustrated according to an illustrative embodiment.
FIG. 7 is a flow chart of a method for data processing illustrated according to an illustrative embodiment.
FIG. 8 is a schematic diagram of configuration information illustrated according to an illustrative embodiment.
FIG. 9 is a schematic diagram of configuration information illustrated according to an illustrative embodiment.
FIG. 10 is a flow chart of a method for data processing illustrated according to an illustrative embodiment.
FIG. 11 is a flow chart of a method for data processing illustrated according to an illustrative embodiment.
FIG. 12 is a flow chart of a method for data processing illustrated according to an illustrative embodiment.
FIG. 13 is a flow chart of a method for data processing illustrated according to an illustrative embodiment.
FIG. 14 is a flow chart of a method for data processing illustrated according to an illustrative embodiment.
FIG. 15 is a block diagram of an apparatus for data processing illustrated according to an illustrative embodiment.
FIG. 16 is a block diagram of an apparatus for data processing illustrated according to an illustrative embodiment.
FIG. 17 is a block diagram of a UE illustrated according to an illustrative embodiment.

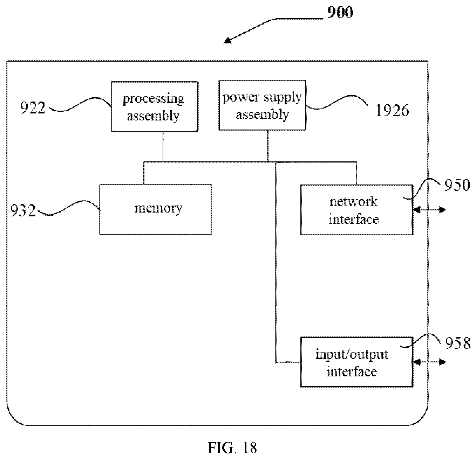

FIG. 18 is a block diagram of a communication device illustrated according to an illustrative embodiment.

### DETAILED DESCRIPTION

Illustrative embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with embodiments of the present disclosure. On the contrary, they are merely examples of a device and a method consistent with some aspects of embodiments of the present disclosure.

The terms used in embodiments of the present disclosure are only for purpose of description of particular embodiments, and are not intended to limit embodiments of the present disclosure. The singular form "a", "the" and "this" used in the present disclosure is also intended to include the plural form, unless other meanings are explicitly expressed in the context. It should be understood that the term "and/or" used herein refers to include any or all of the possible combinations of one or a plurality of listed related items.

It should be understood that, although the terms "first", "second", "third" may be employed by embodiments of the present disclosure to describe various information, these information should not limited by these terms. These terms are only used to distinguish the information of the same type from each other. For example, a first information may be referred to as a second information without departing from the scope of embodiments of the present disclosure, and similarly, the second information may also be referred to as the first information. Depending on the context, the word "if" used herein may be interpreted as "when...", "upon..." or "in response to determination".

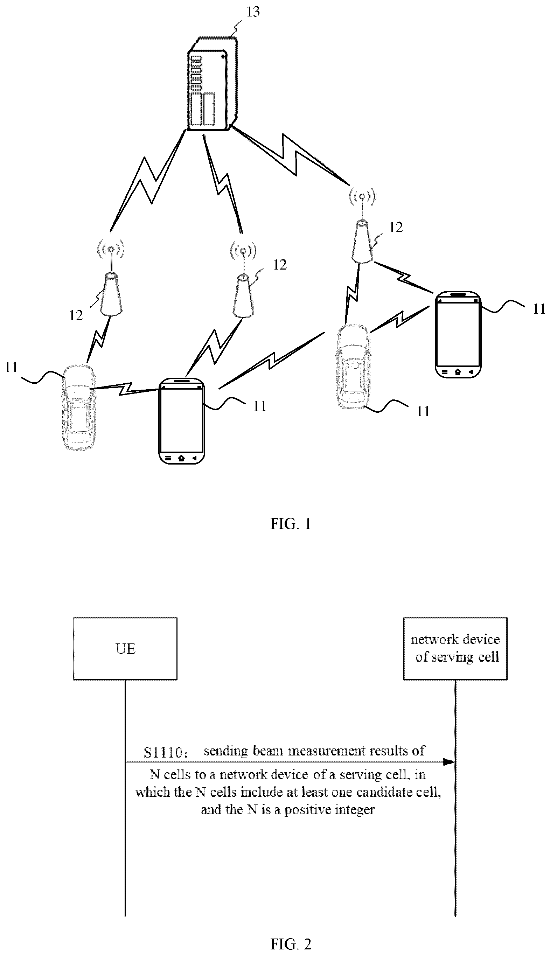

As illustrated in FIG. 2, which is a schematic diagram of a wireless communication system provided by an embodiment of the present disclosure. As illustrated in the figure, the wireless communication system is a communication system based on cellular mobile communication technology, and the wireless communication system may include: a plurality of terminals 11 and a plurality of access devices 12.

The terminal 11 may be a device that provides voice and/or data connectivity to a user. The terminal 11 may communicate with one or more core networks via a Radio Access Network (RAN), and the terminal 11 may be an IoT terminal, such as a sensor device, a mobile phone (or a cellular phone), and a computer having an IoT terminal, which may be, for example, a stationary, portable, pocket-sized, hand-held, computer-built, or vehicle-mounted device. For example, a station (STA), subscriber unit, subscriber station, mobile station, mobile, remote station, access point, remote terminal, access terminal, user terminal, user agent, user device, or user equipment (terminal). Alternatively, the terminal 11 may be a device for an unmanned aerial vehicle. Alternatively, the terminal 11 may be a vehicle-mounted device, e.g., it may be a vehicle computer with wireless communication capabilities, or a wireless communication device that is external to the vehicle computer. Alternatively, the terminal 11 may also be a roadside device, e.g., it may be a street light, a signal light, or other roadside device, etc., with wireless communication capabilities.

The access device 12 may be a network-side device in a wireless communication system. The wireless communication system may be the 4th generation mobile communication (4G) system, also known as a Long Term Evolution (LTE) system; or the wireless communication system may be a 5G system, also known as a new radio (NR) system or a 5G NR system. Alternatively, the wireless communication system may be a further next-generation system of the 5G system. The access network in the 5G system can be called New Generation-Radio Access Network (NG-RAN). Alternatively, an MTC system.

The access device 12 may be an evolved access device (eNB) used in the 4G system. Alternatively, the access device 12 may be an access device (gNB) with a centralized distributed architecture in the 5G system. When the access device 12 has a centralized distributed architecture, it typically includes a centralized unit (CU) and at least two distributed units (DUs). The centralized unit is provided with protocol stacks for Packet Data Convergence Protocol (PDCP) layer, Radio Link Control (RLC) layer, and Media Access Control (MAC) layer; the distributed unit is provided with a physical (PHY) layer protocol stack, and embodiments of the present disclosure do not limit the specific implementation of the access device 12.

A wireless connection may be established between the access device 12 and the terminal 11 via a radio air interface. In various embodiments, the radio air interface is a radio air interface based on a fourth generation mobile communication network technology (4G) standard; or the radio air interface is a radio air interface based on a fifth generation mobile communication network technology (5G) standard, such as the radio air interface is a new radio; or the radio air interface may be a radio air interface based on a further next generation mobile communication network technology standard based on 5G.

As illustrated in FIG. 2, embodiments of the present disclosure provide a method for data processing, which is performed by a UE and includes the following step.

In S1110: beam measurement results of N cells are sent to a network device of a serving cell, in which the N cells include at least one candidate cell, and N is a positive integer.

The UE may be various types of terminal devices, and for example, the terminal device may be a mobile terminal and/or a fixed terminal. The mobile terminal may include, but is not limited to: a mobile phone, a tablet computer, a wearable device, a vehicle-mounted device, a smart home device, and/or a smart office device.

In embodiments of the present disclosure the beam measurement results of the N cells are reported to the network device such as a base station or a remote radio unit of the serving cell.

The beam measurement result is a measurement result of Layer (L) 1 of the UE.

The N cells may at least include at least one candidate cell, which may be a cell that is selected to meet a specific condition for hand-in according to an L3 measurement result of the UE.

By way of example, the UE measures a synchronization signal and PBCH block (SSB) of the serving cell and the neighboring cells, the PBCH may be a physical broadcast channel and/or a channel state indication reference signal (CSI-RS) to obtain Layer 3 (L3) measurement results of the serving cell and neighboring cells. One or more neighboring cells of good quality are selected as the candidate cells according to the Layer 3 measurement results. A cell identifier of the candidate cell is sent to the UE by the serving cell. For example, the serving cell may send a candidate cell configuration to the UE, e.g., via an RRC message, and the candidate cell configuration may carry the cell identifier of the candidate cell. In another embodiment, the candidate cell configuration may further include: a measurement configuration for the UE to measure the candidate cell, which may be an L1 measurement configuration for the UE to measure a beam of the candidate cell and obtain a beam measurement result.

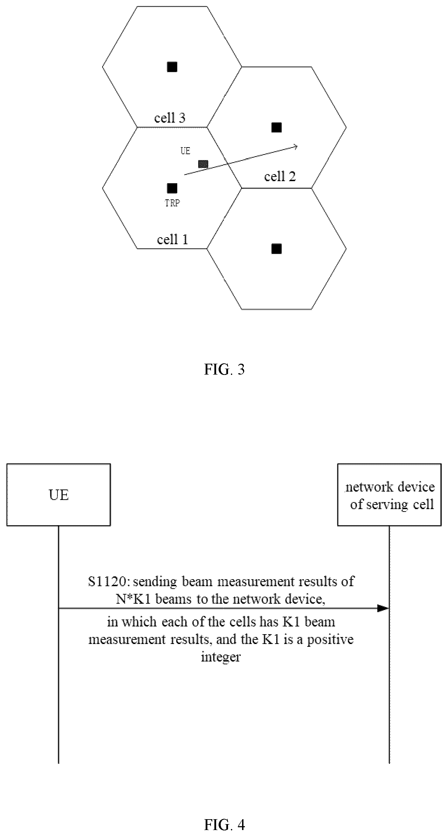

As illustrated in FIG. 3, the neighboring cells of cell 1 include: cell 2, cell 3, and cell 4. Based on the L3 measurement results of the UE for cell 2, cell 3, and cell 4, the candidate cell for the UE may include one or more of cell 2, cell 3, and cell 4. The candidate cell for the UE in FIG. 3 may be cell 2 without cell 3 and cell 4.

The beam measurement result may include, but is not limited to, Reference Signal Received Power (RSRP) and/or Signal to Interference plus Noise Ratio (SINR), among others.

In some embodiments, the N cells may include: the serving cell. By way of example, the UE sends the beam measurement results of the serving cell and each candidate cell together to the network device of the serving cell, to facilitate the network device of the serving cell to determine, based on the received beam measurement result of the serving cell and the beam measurement result of the candidate cell, whether or not the UE needs to perform a cell handover and/or a target cell to which the UE will switch and access. The target cell may be one of the aforementioned candidate cells. If the N cells include the current serving cell of the UE, then N may be a positive integer equal to or greater than 2 in this case.

In an embodiment, the beam measurement result may be carried in a measurement report for reporting, and a format of the measurement report may be defined by a reporting configuration.

In an embodiment, the beam measurement result may be carried in various high-level messages for reporting, and the high-level messages may include, but is not limited to: an RRC message and/or a MAC layer message.

In other embodiments, of course, the beam measurement result may also be carried in a physical layer message (e.g., Uplink Control Information, UCI), or Physical Uplink Shared Channel (PUSCH) for reporting to the network device of the serving cell.

In summary, in embodiments of the present disclosure, the UE sends the beam measurement results of the candidate cells to the network device of the serving cell, so that the network device of the serving cell can select a target cell for the UE to access according to the beam measurement results of the candidate cells, which shortens the process and latency of cell handover for the UE.

As illustrated in FIG. 4, embodiments of the present disclosure provide a method for data processing, which is performed by a UE and includes the following step.

In S1120: beam measurement results of N*K1 beams are sent to the network device, in which each cell has K1 beam measurement results, and K1 is a positive integer.

The UE may have multiple beam measurement results for each cell, and different beam measurement results may be the results of different beam measurements.

Thus, the UE will report N*K1 beam measurement results in a single reporting of beam measurement results. If the N cells include the serving cell, the N*K1 beam measurement results include (N-1)*K1 beam measurement results of the candidate cells.

By way of example, the K1 beam measurement results for a cell may be: K1 best beam measurement results for the cell or all beam measurement results for the cell. The K1 best beam measurement results for a cell are the beam measurement results of the top K1 of all the beam measurement results of a cell ordered from high to low according to RSRP or SINAR.

For example, the UE measures S beam measurement results for a cell, and if S is greater than or equal to K1, the UE selects the K1 beam measurement results with the best beam quality from the S beam measurement results for the corresponding cell for reporting. If S is less than K1, the UE reports the S beam measurement results as well as the (S-K1) beam measurement results that are 0 to the network device of the serving cell.

By way of example, Table 1 shows a schematic illustration of the N*K1 beam measurement results.

**Table 1**

| | 1st beam measurement result | 2nd beam measurement result | ...... | K1^{th} beam measurement result |
|---|---|---|---|---|
| Cell 1 | XXX | XXX | XXX | XXX |
| Cell 2 | XXX | XXX | XXX | XXX |
| Cell ...... | XXX | XXX | XXX | XXX |
| Cell N | XXX | XXX | XXX | XXX |

By way of example, assuming that the N cells include the serving cell, the K1 beam measurement results of the serving cell may be placed at the top of the measurement report. The other candidate cells can be ordered from largest to smallest or from smallest to largest according to values mapped by the cell identifiers (e.g., Physical cell identifiers, PCIs) of the candidate cells, and the beam measurement results of the individual candidate cells are placed sequentially behind the serving cell according to the ordering of the cell identifiers.

By way of further example, assuming that the N cells include the serving cell, the K1 beam measurement results of the serving cell may be placed at the end of the measurement report. The other candidate cells can be ordered from largest to smallest or from smallest to largest according to values mapped by the cell identifiers (e.g., physical cell identifiers, PCIs) of the candidate cells, and the beam measurement results of the individual candidate cells are placed sequentially in front of the serving cell according to the ordering of the cell identifiers.

By way of further example, assuming that the N cells include the serving cell, the UEs can be ordered from largest to smallest or from smallest to largest according to values mapped by the cell identifiers (e.g., physical cell identifiers, PCIs) of the serving cell and the candidate cells, and the beam measurement results of the individual cells of the N cells are placed sequentially in front of the serving cell according to the ordering of the cell identifiers.

By reporting the N*K1 beam measurement results of the N cells in this way, the network device may determine the cell corresponding to the beam measurement result according to the ordering of the beam measurement results without the need of reporting the cell identifiers, thereby reducing the signaling overhead.

Further, the K1 beam measurement results for a cell may be ordered from largest to smallest or from smallest to largest in accordance with the beam quality, so that after the network device receives the beam measurement results, it may quickly locate the beam quality of the best beam and the beam quality of the worst beam of a cell, to provide the UE with a quick judgment basis for selecting the target cell for cell handover.

Of course, the above is only a specific example of reporting N*K1 beam measurement results, and the specific implementation is not limited to the above example.

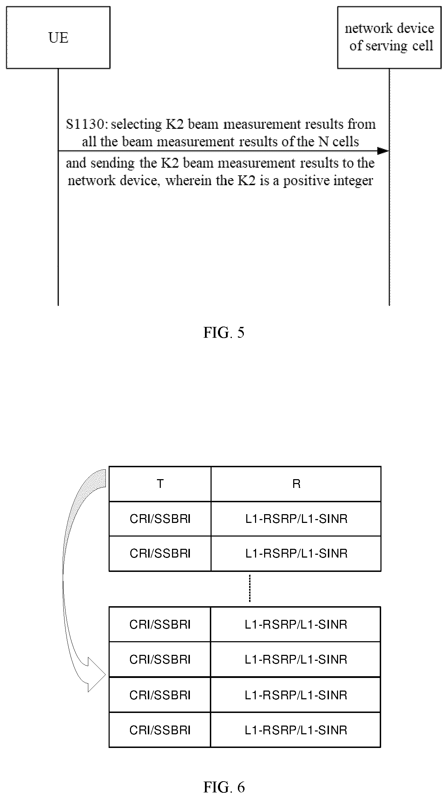

As illustrated in FIG. 5, embodiments of the present disclosure provide a method for data processing, which is performed by a UE and includes the following step.

In S1130: K2 beam measurement results is selected from all the beam measurement results of the N cells, and the K2 beam measurement results is sent to the network device of the serving cell, in which K2 is a positive integer.

In an embodiment, in order to control signaling overhead, it may be predetermined that only K2 beam measurement results are reported regardless of the magnitude of the value of N and/or the number of beams per cell measured by the UE.

K2 may be a positive integer greater than or equal to 2 if the N cells include the serving cell.

When reporting the K2 beam measurement results, the specific way and format of reporting the beam measurement results can be determined according to the network configuration sent by the network device and/or protocol.

Optional ways are provided below:
In a way, K2 is greater than or equal to N, then the K2 beam measurement results at least include: the best beam measurement result for each of the N cells.

In another way, if K2 is less than N, then the K2 beam measurement results can be as follows: all beam measurement results of the N cells are ordered, and then the K2 beam measurement results with the highest beam quality are selected for reporting. In this case, then the following scenarios are possible: there are cells without a single beam measurement result included in the K2 beam measurement results, and there are cells with multiple beam measurement results included in the K2 beam measurement results. Subsequently, the network device may select the candidate cell corresponding to the highest number of beam measurement results included in the K2 best beam measurement results as the target cell for UE cell handover according to the candidate cells to which the K2 best beam measurement results belong. If there exist two or more candidate cells with the same number of beam measurement results included in the K2 best beam measurement results, the average value of the beam measurement results belonging to the same cell included in the K2 best beam measurement results is calculated, and the candidate cell with the largest average value is preferably selected as the target cell, or the best beam measurement results corresponding to the two or more cells are compared, and the candidate cell with the largest best beam measurement result is preferably selected as the target cell.

Of course, the above is only an example, and the specific implementation is not limited to the above example.

In still other embodiments, if K2 is greater than or equal to N, each cell may report the floor of K2/N beam measurement results. The beam measurement results reported for each cell are the best beam measurement results for the corresponding cell.

By way of example, the K2 beam measurement results are K2 best beam measurement results from all the beam measurement results of the N cells.

In an embodiment, sending the beam measurement results of the N cells to the network device of the serving cell includes: sending a measurement report to the network device, in which the measurement report includes the beam measurement results of the N cells.

That is, the UE reports the beam measurement results of the N cells to the network device such as the base station through the measurement report.

In an embodiment, the measurement report includes: a measurement value being a best measurement beam measurement result of one or more cells of the N cells; and a differential value being a difference between the best measurement beam measurement result of the one or more cells and other beam measurement results of the N cells.

The measurement value can be RSRP or SINA etc. obtained from beam measurements.

In another embodiment, the measurement report has a first portion and a second portion.

The first portion includes a best beam measurement result of each cell of the N cells; and the second portion includes a beam measurement result other than the best beam measurement result of each cell of the N cells.

If the measurement report is divided into the first portion and the second portion, the first portion may carry at least one measurement value and the other differential values, or the first portion may be all measurement values. Correspondingly, the second portion may all be differential values relative to one measurement value of the first portion, or the second portion at least carries one measurement value and the rest are differential values.

Therefore, the first portion may include the following options.

Option 1: the first portion includes: a measurement value of a best beam measurement result of the one or more cells of the N cells and a differential value, in which the differential value is a difference between the measurement value of the best beam measurement result of the one or more cells and remaining beam measurement results of the N cells.

Option 2: the first portion includes the measurement value. In such embodiments, the first portion does not contain differential values.

Therefore, the second portion may include the following options.

Option 1: the second portion includes a measurement value of a beam measurement result other than the best beam measurement result of each cell of the N cells and a differential value; and the differential value is a difference between the beam measurement result other than the best beam measurement result of each cell and remaining beam measurement results of the N cells.

Option 2: the second portion includes the measurement value. In such embodiments, the second portion does not contain differential values.

In some embodiments, the measurement report including the beam measurement results includes: a measurement value of a first beam measurement result; in which the first beam measurement result is: the best measurement beam measurement result of one or more cells of the N cells; and the one or more cells here may be: a predetermined cell such as the serving cell or a designated one or more candidate cells, or a cell with the beam measurement result located at a specific position in the measurement report; and a differential value between a second beam measurement result and a measurement value corresponding to the best beam measurement result, and the second beam measurement result is a measurement result other than the first beam measurement result.

The measurement value may be an actual value measured by the UE when performing the beam measurement, e.g., an actual value of SINR and/or RSPR.

In order to reduce signaling overhead, a part of the measurement report may contain the measurement value, and other beam measurement results may be the differential values of specific measurement value.

By way of example, the first beam measurement result may be: a beam measurement result of the serving cell or a beam measurement result of a designated cell of the plurality of candidate cells.

In an embodiment, the measurement value of the first beam measurement result may be carried at a predetermined position of the measurement report, e.g., the predetermined position may be a start position, an end position, or an intermediate position.

In another embodiment, the position of the measurement value of the first beam measurement result in the measurement report may depend on the ordering of the cell numbers of the individual cells, etc.

In summary, in embodiments of the present disclosure, the measurement report will at least carry the measurement value of one beam measurement result, and the other beam measurement results may be reported in a manner that is realized as the difference value of the measurement value, thereby saving the overhead required for reporting signaling.

In an embodiment, all the beam measurement results in the measurement report are in a single whole, and it is sufficient for the network device to decode them sequentially after receiving them.

In an embodiment, the measurement report of the beam measurement results has the first portion and the second portion.

The first portion includes a third beam measurement result, in which the third beam measurement result is the best beam measurement result of each cell of the N cells; and the second portion includes a fourth beam measurement result, in which the fourth beam measurement result is the beam measurement result other than the third beam measurement result.

In an embodiment, the measurement report is divided into the first portion and the second portion. The first portion contains the third beam measurement result and the second portion contains the fourth beam measurement result. The number of the third beam measurement results may be N; and the number of the fourth beam measurement results may be one or more.

In this way, if the network device receives the measurement report, it can know the best beam measurement result of each cell by parsing the first portion. If the measurement report also includes the second portion, the second portion carries non-best beam measurement results for one or more cells.

If the measurement report does not carry the cell identifier, the best beam measurement results of the N cells in the first portion can then be arranged in a preset order. For example, it may be ordered by the position configured by the network device, or by the ordering position of the cell identifiers of the candidate cells.

The non-best beam measurement result of the N cells in the second portion can also be arranged in a preset order. The serving cell is placed in the top or end position of the first portion, and the other candidate cells may be ordered according to the position configured by the network device, or according to the ordering position of the cell identifiers of the candidate cells.

If the measurement report does not carry the cell identifier, the predetermined order of the first portion and the second portion is the same, i.e., the ordering of the beam measurement results of the N cells is the same in the first portion and the second portion.

If the measurement report carries the cell identifier, the cell identifier and the beam measurement result can be placed correspondingly, and then the individual beam measurement results do not need to be ordered according to the network configuration.

In an embodiment, the first portion may include: a measurement value of a fifth beam measurement result and a differential value between a sixth beam measurement result and the fifth beam measurement result, in which the fifth beam measurement result is: a beam measurement result of one cell of the N third beam measurement results; and the sixth beam measurement result is: the third beam measurement result other than the fifth beam measurement result.

By way of example, the fifth beam measurement result may be the best beam measurement result of the serving cell or the best beam measurement result of the candidate cell located at the foremost position of the first portion. The sixth beam measurement result is any beam measurement result in the third beam measurement result other than the fifth beam measurement result.

In this way, the first portion may carry one measurement value, and the rest are all differential values of the beam measurement results, thus reducing the signaling overhead of the first portion in the measurement report.

In another embodiment, the first portion includes: the measurement values of the N third beam measurement results. In this embodiment, the first portion carries the measurement values of all third beam measurement results without containing the differential values.

In an embodiment, the second portion includes: a measurement value of a seventh beam measurement result, in which the seventh beam measurement result is: a beam measurement result of the fourth beam measurement results; and a differential value between an eighth beam measurement result and a measurement value corresponding to the seventh beam measurement result, and the eighth beam measurement result is the fourth beam measurement result different from the seventh beam measurement result.

In this embodiment, the second portion may carry one measurement value, and differential values of other beam measurement results, to likewise reduce signaling overhead.

The seventh beam measurement result may be a beam measurement result of the serving cell or other candidate cell located at a predetermined position in the second portion.

In another embodiment, the second portion includes: the measurement value of the fourth beam measurement result.

In order to reduce the amount of computation, the second portion can also all carry the measurement values of the fourth beam measurement results without carrying any of the differential values.

In an embodiment, the first portion further includes: a preset identifier configured to indicate whether the second portion is present or not.

In a specific implementation, a format configuration of the measurement report may be defined: the actually reported measurement report may at least include the first portion, with the second portion being optional. In this case, the UE may selectively report the second portion.

To facilitate decoding by the network device, the first portion may carry the preset identifier. The preset identifier may include one or more bits. The preset identifier may indicate whether the measurement report carries the second portion, i.e. indicate whether the measurement report has the second portion.

For example, the preset identifier may be carried by a bit that takes the value of "0" representing that the second portion is not present, and takes the value of "1" representing that the second portion is present. Alternatively the bit takes the value of "1" representing that the second portion is not present, and takes the value of "0" representing that the second portion is present.

FIG. 6 shows a schematic diagram of a measurement report including the first portion and the second portion and indicating the presence of the second portion by the preset identifier (T).

In FIG. 6, CRI represents the identifier of CSI-RS; SSBRI represents the identifier of SSB. A feedback value may be the aforementioned measurement value and/or the differential value.

L1-RSRP represents the RSPR of the beam. L1-SINR represents the SINR of the beam.

In some embodiments, the measurement report includes: cell identifiers of the N cells, in which in the measurement report, a cell identifier of m^{th} cell is set corresponding to the beam measurement result of the m^{th} cell.

In order to facilitate the network device to know the cell corresponding to each beam measurement result, the measurement report will also carry the cell identifier, and the cell identifier includes but is not limited to PCI.

A plurality of cell identifiers are distributed at intervals, and a cell is followed or preceded by the beam measurement result of the cell to which itself corresponds.

In another embodiment, the cell identifiers of the plurality of cells are continuously distributed, and the beam measurement results are also continuously distributed, with the difference that: the distribution positions of the beam measurement results are in correspondence with the cell identifiers of the corresponding cells.

In an embodiment, the measurement report includes: the beam measurement results of the N cells set in the measurement report in accordance with a cell ordering of a network preconfiguration.

The network preconfiguration here may be defined by the network device through a reporting configuration, or by negotiating in an arbitrary manner in advance.

In this way, the measurement report does not carry the cell identifier, thus saving signaling overhead for cell identifier. However, in order to facilitate the network device to know the cell to which each beam measurement result belongs, the beam measurement results of the N cells are ordered in the measurement report according to a preset position.

In some embodiments, sending the beam measurement results of the N cells to the network device of the serving cell includes: sending the beam measurement results of the N cells to the network device of the serving cell according to configuration information.

For example, when the UE reports the beam measurement results, the UE will receive the configuration information from the network device, or determine configuration information according to a protocol agreement, in advance.

The beam measurement results of the N cells are sent to the network device of the serving cell according to configuration information.

The configuration information may include at least one of the following: a reporting number, defining a size of the N, and/or a size of K1 and/or K2; and a reporting format configuration, and a resource configuration indicating a reporting resource for the measurement report.

The reporting format configuration indicates a reporting format. For example, one or more reporting formats are agreed upon in advance in a protocol, and the reporting format configuration specifies one from the plurality of formats agreed upon in the protocol.

The reporting format is associated with the type of reporting value, the number of beam measurement results for reporting, reporting the beam measurement results in accordance with a preset order or carrying a cell identifier. The preset order may be a configuration specified by the network device, or an order agreed upon in the protocol, or a default order between the network device and the UE.

By way of example, the reporting format may include any of the following:
Format 1, reporting N*K1 beam measurement results, in which all reported are the measurement values of individual beam measurement results; ordering the individual beam measurement results according to the preset order, or carrying the cell identifier.
Format 2, reporting N*K1 beam measurement results, in which the reported are the measurement values of one or more beam measurement results and differential values of other beam measurement results; ordering the individual beam measurement results according to the preset order, or carrying the cell identifier.
Format 3, reporting K2 beam measurement results, in which all reported are the measurement values of individual beam measurement results; ordering the individual beam measurement results according to the preset order, or carrying the cell identifier.
Format 4, reporting K2 beam measurement results, in which the reported are the measurement value of one beam measurement result and differential values of other beam measurement results; ordering the individual beam measurement results according to the preset order, or carrying the cell identifier.

Of course, the above is only an example of the configuration information, and the specific implementation is not limited to the above example.

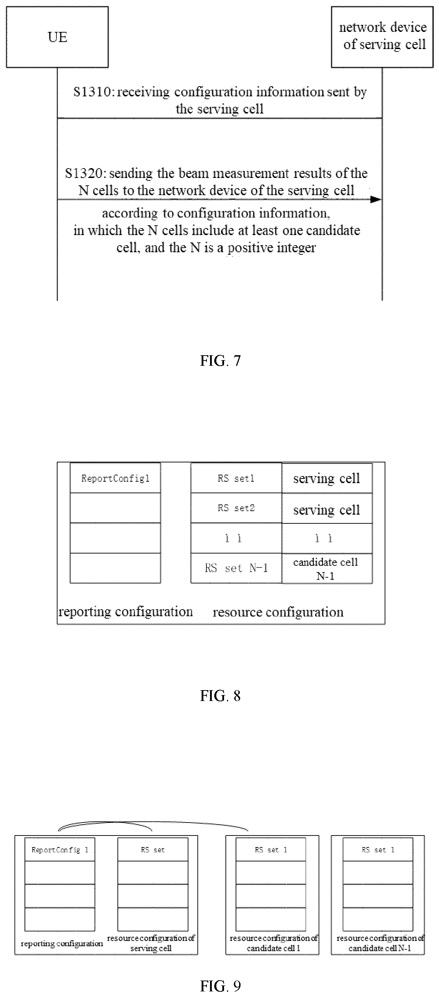

As illustrated in FIG. 7, embodiments of the present disclosure provide a method for data processing, which is performed by a UE and includes the following steps.

In S1310: configuration information sent by the serving cell is received.

In S1320: beam measurement results of N cells are sent to a network device of a serving cell according to the configuration information, in which the N cells include at least one candidate cell, and N is a positive integer.

In embodiments of the present disclosure, the UE receives configuration information in advance and then reports the beam measurement results according to the configuration information.

In some embodiments, the configuration information may include at least: a candidate cell configuration, and the candidate cell configuration may include: a cell identifier of the candidate cell, a beam measurement configuration, and/or a reporting configuration. In another embodiment, the configuration information may further include: a serving cell configuration, and the serving cell configuration may include: a beam measurement configuration of the serving cell, and/or a reporting configuration of the measurement report.

In an embodiment, the configuration information is carried in a first IE; the first IE includes: a resource configuration configured to determine a resource to measure beams of the severing cell and at least one candidate cell, in which the resource configuration at least includes a configuration for one candidate cell.

In this embodiment, indication information (i.e., resource configuration) of the resources for performing beam measurements of the candidate cell and the serving cell is carried in the same IE, i.e., the first IE.

Further, in an embodiment, the first IE further includes: a reporting configuration configured for reporting of the beam measurement results.

In another embodiment, the configuration information is carried in a second IE and a third IE; the second IE includes: a resource configuration for the serving cell configured to determine a resource to be indicated to measure the serving cell; and the third IE includes: a resource configuration for the candidate cell configured to determine a resource to measure the candidate cell.

In this embodiment, the resource configurations of the candidate cell and the serving cell are carried in different IEs. The second IE and the third IE are different IEs, and the second IE and the third IE may be carried in the same message or in different messages.

In this way, the resource configurations of different candidate cells may be carried in different third IEs, or the resource configurations of all candidate cells may be carried in one third IE.

In another embodiment, the second IE further includes a reporting configuration configured for reporting of the beam measurement results.

It is noted that: in some embodiments, the first IE, the second IE, and the third IE may all be carried by an RRC message, a MAC message, or downlink control information (DCI).

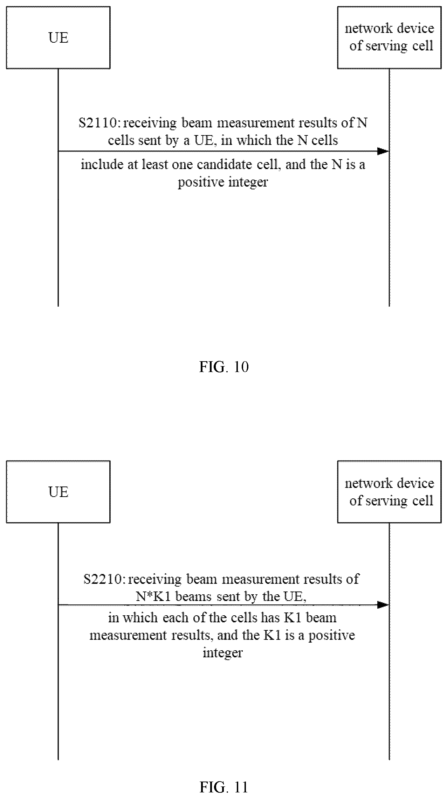

As illustrated in FIG. 10, embodiments of the present disclosure provides a method for data processing, which is performed by a network device of a serving cell and includes the following step.

In S2110: beam measurement results of N cells sent by the UE are received, in which the N cells include at least one candidate cell, and N is a positive integer.

The network device may be an access network device such as a base station of the serving cell of the UE.

In embodiments of the present disclosure, the network device of the serving cell of the UE receives the beam measurement results of the N cells sent together by the UE. The N cells include at least one candidate cell.

The candidate cell may be: one or more cells selected by the network device of the serving cell from neighboring cells according to L3 measurement results of the UE.

Since the UE together gives the beam measurement results of the N cells to the network device of the serving cell, so that the serving cell can determine whether to initiate the cell handover process of the UE according to the beam measurement results. For example, when it is found that the beam measurement quality of one or more candidate cells is higher than the beam quality of the serving cell, it may be determined to initiate the cell handover process for the UE. If it is determined that the cell handover process of the UE is initiated, the target cell for the cell handover of the UE is further determined according to the beam measurement result.

As illustrated in FIG. 11, embodiments of the present disclosure provide a method for data processing, which is performed by a network device of a serving cell and includes the following step.

In S2210: beam measurement results of N*K1 beams sent by the UE are received, in which each cell has K1 beam measurement results, and the K1 is a positive integer.

In embodiments of the present disclosure, each cell of the N cells at least has a beam measurement result of one candidate cell. If K1 is greater than 1, each cell at least has two beam measurement results reported to the network device of the serving cell.

In some embodiments, the K1 best beam measurements for each cell reported by the UE are received.

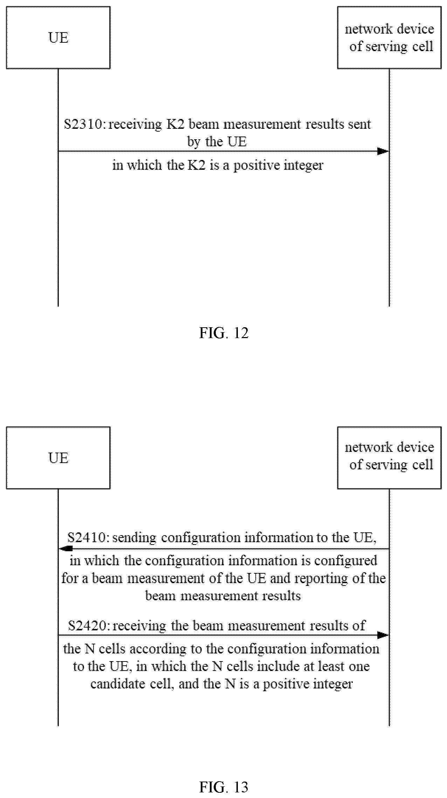

As illustrated in FIG. 12, embodiments of the present disclosure provide a method for data processing, which is performed by a network device of a serving cell and includes the following step.

In S2310: K2 beam measurement results sent by the UE are received, in which K2 is a positive integer.

In some embodiments, in order to save signaling overhead, only K2 beam measurement results will be reported in a single reporting. The K2 beam measurement results may be from one or more cells of the N cells, and the one or more cells here may include the serving cell and/or candidate cells.

The K2 beam measurement results may be: the K2 best beam measurement results of all beam measurement results of the N cells, or, if K2 is greater than or equal to N, the K2 beam measurement results may be: the best beam measurement results of the N cells, and the remaining K2-N beam measurement results may be: one or more best beam measurement results other than the non-best beam measurement results of the N cells.

After receiving the K2 best beam measurement results, a determination may be made as to whether or not to trigger the cell handover process of the UE according to whether or not the K2 best beam measurement results include the beam measurement result of the serving cell. One of the candidate cells to which the K2 best beam measurement results belong is the target cell.

In an embodiment, the K2 beam measurement results are K2 best beam measurement results from all the beam measurement results of the N cells. Here, the K2 best beam measurement results may be: all beam measurement results of N cells, without distinguishing between cells, are ordered in descending order according to the measurement parameter that characterizes good beam quality (e.g., RSPR or SINA), and the K2 beam measurement results with the highest ordering are taken.

In an embodiment, receiving the beam measurement results of the N cells sent by the UE includes: receiving a measurement report sent by the UE, in which the measurement report includes the beam measurement results of the N cells.

That is, the UE reports the beam measurement results of the N cells to the network device such as the base station through the measurement report.

In an embodiment, the measurement report includes: a measurement value being a best measurement beam measurement result of one or more cells of the N cells; and a differential value being a difference between the best measurement beam measurement result of the one or more cells and other beam measurement results of the N cells.

The measurement value can be RSRP or SINA etc. obtained from beam measurements.

In another embodiment, the measurement report has a first portion and a second portion.

The first portion includes a best beam measurement result of each cell of the N cells; and the second portion includes a beam measurement result other than the best beam measurement result of each cell of the N cells.

If the measurement report is divided into the first portion and the second portion, the first portion may carry at least one measurement value and the other differential values, or the first portion may be all measurement values. Correspondingly, the second portion may all be differential values relative to one measurement value of the first portion, or the second portion at least carries one measurement value and the rest are differential values.

Therefore, the first portion may include the following options:
Option 1: the first portion includes: a measurement value of a best beam measurement result of the one or more cells of the N cells and a differential value, in which the differential value is a difference between the measurement value of the best beam measurement result of the one or more cells and remaining beam measurement results of the N cells.
Option 2: the first portion includes the measurement value. In such embodiments, the first portion does not contain differential values.

Therefore, the second portion may include the following options:
Option 1: the second portion includes a measurement value of a beam measurement result other than the best beam measurement result of each cell of the N cells and a differential value; and the differential value is a difference between the beam measurement result other than the best beam measurement result of each cell and remaining beam measurement results of the N cells.
Option 2: the second portion includes the measurement value. In such embodiments, the second portion does not contain differential values.

That is, in some embodiments, the measurement report including the beam measurement results includes: a measurement value of the first beam measurement result, in which the first beam measurement result is the best beam measurement result of at least one cell of the N cells; and a differential value between a second beam measurement result and a measurement value corresponding to the best beam measurement result, the second beam measurement result being a measurement result other than the first beam measurement result.

A cell here may be a serving cell or any cell located at a preset position in the measurement report, and any cell located at the preset position may be the serving cell and/or the candidate cell.

For example, the first beam measurement result is: the beam measurement result of beam A of cell 1, and the second beam measurement result is the beam measurement result of beam B of cell 2. In embodiments of the present disclosure, the measurement report may include: a measurement value of beam A of cell 1, and a differential value between the measurement value of beam B of cell 2 and the measurement value of beam A of cell 1.

Of course, the above is only an example of the contents contained in the measurement report, and the specific implementation is not limited to the above example.

In an embodiment, the measurement report including the beam measurement results has the first portion and the second portion.

The first portion includes a third beam measurement result, in which the third beam measurement result is the best beam measurement result of each cell of the N cells; and the second portion includes a fourth beam measurement result, in which the fourth beam measurement result is the beam measurement result other than the third beam measurement result.

In embodiments of the present disclosure, the measurement report may include two portions, one portion is the best beam measurement result of each cell, and the other portion may include non-best beam measurement result of each cell.

In another embodiment, the measurement report may also include only the first portion, i.e. the measurement report may include only the best beam measurement result for each cell of the N cells.

In an embodiment, the first portion may include: a measurement value of a fifth beam measurement result and a differential value between a sixth beam measurement result and the fifth beam measurement result, in which the fifth beam measurement result is: a beam measurement result of one cell of the N third beam measurement results.

The sixth beam measurement result is: the third beam measurement result other than the fifth beam measurement result.

By way of example, the fifth beam measurement result may be the best beam measurement result of the serving cell or the best beam measurement result of the candidate cell located at the foremost position of the first portion. The sixth beam measurement result is: any beam measurement result in the third beam measurement result other than the fifth beam measurement result.

In this way, the first portion may carry one measurement value, and the rest are all differential values of the beam measurement results, thus reducing the signaling overhead of the first portion in the measurement report.

In another embodiment, the first portion includes: the measurement values of the N third beam measurement results. In this embodiment, the first portion carries the measurement values of all third beam measurement results without containing the differential values.

In another embodiment, the first portion includes: the measurement values of the N third beam measurement results. In this embodiment, the first portion carries the measurement values of all third beam measurement results without containing the differential values.

In an embodiment, the second portion includes: a measurement value of a seventh beam measurement result, in which the seventh beam measurement result is: a beam measurement result of the fourth beam measurement results; and a differential value between an eighth beam measurement result and a measurement value corresponding to the seventh beam measurement result, and the eighth beam measurement result is the fourth beam measurement result different from the seventh beam measurement result.

In this embodiment, the second portion may carry one measurement value, and differential values of other beam measurement results, to likewise reduce signaling overhead.

The seventh beam measurement result may be a beam measurement result of the serving cell or other candidate cell located at a predetermined position in the second portion.

In another embodiment, the second portion includes: the measurement value of the fourth beam measurement result.

In order to reduce the amount of computation, the second portion can also all carry the measurement values of the fourth beam measurement results without carrying any of the differential values.

In an embodiment, the first portion further includes: a preset identifier configured to indicate whether the second portion is present or not.

In a specific implementation, a format configuration of the measurement report may be defined: the actually reported measurement report may at least include the first portion, with the second portion being optional. In this case, the UE may selectively report the second portion.

To facilitate decoding by the network device, the first portion may carry the preset identifier. The preset identifier may include one or more bits. The preset identifier may indicate whether the measurement report carries the second portion, i.e. indicate whether the measurement report has the second portion.

In some embodiments, the measurement report includes: cell identifiers of the N cells. In order to facilitate the network device to know the cell corresponding to each beam measurement result, the measurement report will also carry the cell identifier, and the cell identifier includes but is not limited to PCI.

A plurality of cell identifiers are distributed at intervals, and a cell is followed or preceded by the beam measurement result of the cell to which itself corresponds.

In another embodiment, the cell identifiers of the plurality of cells are continuously distributed, and the beam measurement results are also continuously distributed, with the difference that: the distribution positions of the beam measurement results are in correspondence with the cell identifiers of the corresponding cells.

As illustrated in FIG. 13, embodiments of the present disclosure provide a method for data processing, which is performed by a network device of a serving cell and includes the following steps.

In S2410: configuration information is sent to the UE, in which the configuration information is configured for a beam measurement of the UE and reporting of the beam measurement results.

In S2420: beam measurement results of N cells sent by the UE are received according to the configuration information, in which the N cells include at least one candidate cell, and N is a positive integer.

In embodiments of the present disclosure, the network device of the serving cell first sends configuration information to the UE, and the configuration information may be configured for beam measurements of the UE for the N cells and/or reporting of beam measurement results.

By way of example, the configuration information indicates the time-frequency domain resource for reporting of the beam measurement results, and therefore the beam measurement results of the N cells sent by said UE are received on the resource when reporting.

In an embodiment, the configuration information is carried in a first IE; and the first IE includes: a resource configuration configured to determine a resource to measure beams of the severing cell and at least one candidate cell, in which the resource configuration at least includes a configuration for one candidate cell.

In embodiments of the present disclosure, the resource to be measured for the serving cell and the candidate cell may be reported by the same IE.

The resource to be measured may be: the serving cell and/or the resources for the serving cell to send SSB and/or CSI-RS.

In an embodiment, the first IE may include: a reporting configuration configured for reporting of the beam measurement results.

The reporting configuration may include configurations such as a reporting number, a reporting format and/or a reporting resource.

As illustrated in FIG. 8, which is a schematic diagram of one IE simultaneously carrying the reporting configuration and resource configurations of the serving cell and the candidate cell.

FIG. 8 illustrates N cells, with one serving cell and N-1 candidate cells.

In an embodiment, the configuration information is carried in the second IE and the third IE; and the second IE includes a resource configuration for the serving cell configured to determine a resource to be indicated to measure the serving cell; and the third IE includes a resource configuration for the candidate cell configured to determine a resource to measure the candidate cell.

In this embodiment, the resource configurations of the candidate cell and the serving cell are carried in different IEs.

FIG 9 illustrates that the resource configurations of the serving cell and the candidate cell are carried by different IEs. In FIG. 8, the resource configurations of the different candidate cells are carried in different IEs, but these IEs are associated with the reporting configurations carried by the IE in which the resource configuration of the serving cell is located. In this case, there may be a plurality of third IEs and the number is equal to the number of candidate cells of the N cells. In FIG. 9, the resource configuration and the reporting configuration of the serving cell are carried in a single IE.

In another embodiment, the resource configurations of all candidate cells may be carried in a single IE, so that the reporting configuration, the resource configuration for the serving cell, and the resource configuration for the candidate cell can be sent to the UE through two IEs together.

In an embodiment, the second IE may include a reporting configuration configured for reporting of the beam measurement results.

Embodiments of the present disclosure propose a beam measurement and result reporting way for candidate cells to support Layer 1/Layer 2 based inter-cell mobility measurement.

The configuration information from the network device is received, beam measurement on the candidate cell is performed according to the configuration information, and the beam measurement result is reported.

By way of example, the network device configures the UE to report the beam measurement results of each cell together to the serving cell, and the UE reports the beam measurement results of each cell to the serving cell in the following manner.

The reporting number may be as follows.

Example 1: N*K beam measurement results can be reported, N is the number of cells and K is the number of beams reported for each cell.

Example 2: the number of reported beam measurement results is K regardless of the number of cells. In this case, it is possible to require the same number of reporting results for each cell; or just to select the best K from reporting results for all the cells for reporting.

The reporting format may be as follows.

All of them are reported in a differential way, i.e., the first one is an absolute value of the measurement result L1-RSRP/L1-SINR (i.e., the aforementioned measurement value), and the others are the difference with this value (i.e., the aforementioned differential value); or the reporting results of the each cell are reported only in a differential way, i.e., the absolute value of the best beam measure value.

In order to differentiate the reporting results of each cell, the order in which the cells are arranged in the reporting can be configured by the network device; or the reporting of PCI can be added to the reporting result.

In some embodiments, in order to reduce reporting overhead. It is possible to divide the measurement results into two portions, the first portion is the beam measurement result of the best beam for each cell, and the latter portion is the other secondary portions for each cell. The presence or absence of the latter portion (i.e., the aforementioned second portion) is communicated to the network by the first portion. As illustrated in FIG. 6, specifying T as 1 or 0 means that the measurement report also contains the second portion.

In an embodiment, configuration information of beam measurement and reporting for the candidate cell is determined for the UE.

Mode 1: The L1 measurement of each candidate cell is configured in the serving cell.

When a measurement reference signal is an SSB, and the measurement model of the SSB defined in the related art (e.g., communication protocol release 17) is reused. When the measurement reference signal is CSI-RS, it is possible to include the reference signal set (RS set) of each cell in the measurement resource configuration; or to include a plurality of measurement resource configurations in one reporting configuration. In order to differentiate, it is necessary to introduce a new identifier in the configuration informing the user which cell the measurement resource belongs to; additionally, it can be considered to be directly associated with the CSI-RS for cell mobility in Radio Resource Management (RRM).

Mode 2: An RRC parameter is configured for each candidate cell; and the RRC parameter can be carried in the following message. The RRC parameter is one of the aforementioned configuration information.

Example 1: an RRC message is pre-configured for each candidate cell.

Example 2: a cellGroupConfig IE is pre-configured for each candidate cell.

Example 3: a SpCellConfig IE is pre-configured for each candidate cell.

The RRC configuration parameter corresponding to each candidate cell includes a beam measurement configuration, which contains a configuration for measurement reference signal. The measurement reference signals for one or more other cells can be associated in the reporting configuration of the serving cell.

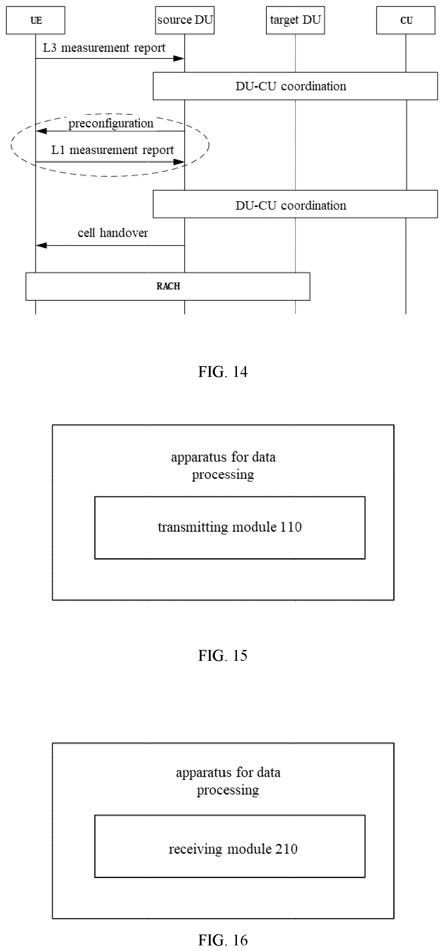

As illustrated in FIG. 14, embodiments of the present disclosure provide method for cell handover, which may include: sending the UE3 an L3 report to a source distributed unit (DU), in which the source DU may be a DU of the serving cell before the UE performs cell handover.

After the source UE receives the L3 measurement report, information interaction/coordination is performed between the source DU, the target UD, and the central unit (CU).

The source DU sends a preconfiguration to the UE, and the preconfiguration may include the aforementioned configuration information.

The UE performs an L1 measurement according to the preconfiguration and sends an L1 measurement report to the source DU, e.g., after measuring the beams of the serving cell and the candidate cell, and reports the obtained beam measurement results to the source DU in the aforementioned manner.

After receiving the beam measurement result, the source DU interacts and coordinates with the target DU and CU, respectively.

A cell handover instruction is sent to the UE.

Subsequently, the UE will access to the target cell. For example, the UE may access the target DU through a random access channel (RACH).

In summary, embodiments of the present disclosure provide a beam measurement and result reporting manner for the candidate cell, allowing a network device such as the base station to obtain the beam measurement result for the candidate cell, to help determine cell dynamic switching of the UE.

As illustrated in FIG. 15, embodiments of the present disclosure provide an apparatus for data processing, which includes: a transmitting module 110 configured to send beam measurement results of N cells to a network device of a serving cell, in which the N cells include at least one candidate cell, and N is a positive integer.

The apparatus for data processing may be a UE.

In some embodiments, the apparatus for data processing may further include: a storage module. The storage module may be connected to the transmitting module 110 and may be configured to store the beam measurement results.

By way of example, the transmitting module 110 may be configured to send beam measurement results of N*K1 beams to the network device of the serving cell, in which each cell has K1 beam measurement results, and K1 is a positive integer.

In an embodiment, the transmitting module 110 may be configured to select K2 beam measurement results from all the beam measurement results of the N cells, and send the K2 beam measurement results to the network device, in which K2 is a positive integer.

The transmitting module 110 is further configured to send a measurement report to the network device, in which the measurement report includes the beam measurement results of the N cells.

In an embodiment, the measurement report includes: a measurement value being a best measurement beam measurement result of one or more cells of the N cells; and a differential value being a difference between the best measurement beam measurement result of the one or more cells and other beam measurement results of the N cells.

In an embodiment, the measurement report has a first portion and a second portion.

The first portion includes a best beam measurement result of each cell of the N cells; and the second portion includes a beam measurement result other than the best beam measurement result of each cell of the N cells.

In an embodiment, the first portion includes: a measurement value of a best beam measurement result of the one or more cells of the N cells and a differential value, in which the differential value is a difference between the measurement value of the best beam measurement result of the one or more cells and remaining beam measurement results of the N cells.

In an embodiment, the first portion includes: the measurement value.

In an embodiment, the second portion includes a measurement value of a beam measurement result other than the best beam measurement result of each cell of the N cells and a differential value; and the differential value is a difference between the beam measurement result other than the best beam measurement result of each cell and remaining beam measurement results of the N cells.

In an embodiment, the second portion includes: the measurement value.

In an embodiment, the first portion further includes: a preset identifier configured to indicate whether the second portion is present or not.

In an embodiment, the measurement report includes: cell identifiers of the N cells.

In an embodiment, the beam measurement results of the N cells set in the measurement report in accordance with a cell ordering of a network preconfiguration.

In some embodiments, the transmitting module 110 is configured to send the beam measurement results of the N cells to the network device of the serving cell according to the configuration information.

In some embodiments, the apparatus further includes: a receiving module configured to receive configuration information sent by the serving cell.

In some embodiments, the configuration information is carried in the first IE, and the first IE includes a resource configuration configured to determine a resource to measure beams of the severing cell and at least one candidate cell, in which the resource configuration at least includes a configuration for one candidate cell.

In some embodiments, the first IE may further include a reporting configuration configured for reporting of the beam measurement results.

In some embodiments, the configuration information is carried in a second IE and a third IE; the second IE includes: a resource configuration for the serving cell configured to determine a resource to be indicated to measure the serving cell; and the third IE includes: a resource configuration for the candidate cell configured to determine a resource to measure the candidate cell.

In some other embodiments, the second IE may further include a reporting configuration configured for reporting of the beam measurement results.

As illustrated in FIG. 16, embodiments of the present disclosure provide an apparatus for data processing, which includes: a receiving module 210 configured to receive beam measurement results of N cells sent by a user equipment (UE), in which the N cells include at least one candidate cell, and N is a positive integer.

The apparatus for data processing may be a network device of the aforementioned serving cell, e.g., the network device may be a DU or a base station of the serving cell, etc.

In some embodiments, the apparatus for data processing may further include: a storage module. The storage module may be configured to store the received beam measurement results.

In an embodiment, the receiving module 210 is configured to receive beam measurement results of N*K1 beams sent by the UE, in which each cell has K1 beam measurement results, and K1 is a positive integer.

In another embodiment, the receiving module 210 is configured to receive K2 beam measurement results sent by the UE, in which K2 is a positive integer.

In an embodiment, the K2 beam measurement results are K2 best beam measurement results from all the beam measurement results of the N cells.

In an embodiment, the receiving module 210 may be configured to receive a measurement report sent by the UE, in which the measurement report includes the beam measurement results of the N cells.

In an embodiment, the measurement report includes: a measurement value being a best measurement beam measurement result of one or more cells of the N cells; and a differential value being a difference between the best measurement beam measurement result of the one or more cells and other beam measurement results of the N cells.

In an embodiment, the measurement report has a first portion and a second portion.

The first portion includes a best beam measurement result of each cell of the N cells; and the second portion includes a beam measurement result other than the best beam measurement result of each cell of the N cells.

In an embodiment, the first portion includes: a measurement value of a best beam measurement result of the one or more cells of the N cells and a differential value, in which the differential value is a difference between the measurement value of the best beam measurement result of the one or more cells and remaining beam measurement results of the N cells.

In an embodiment, the first portion includes: the measurement value.

In an embodiment, the second portion includes: a measurement value of a beam measurement result other than the best beam measurement result of each cell of the N cells and a differential value, in which the differential value is a difference between the beam measurement result other than the best beam measurement result of each cell and remaining beam measurement results of the N cells.

In an embodiment, the second portion includes: the measurement value.

In an embodiment, the first portion further includes: a preset identifier configured to indicate whether the second portion is present or not.

In an embodiment, the measurement report includes: cell identifiers of the N cells.

In an embodiment, the beam measurement results of the N cells are set in the measurement report in accordance with a cell ordering.

In an embodiment, the apparatus for data processing further includes: a transmitting module configured to send configuration information to the UE, in which the configuration information is configured for a beam measurement of the UE and reporting of the beam measurement results.

In an embodiment, the configuration information is carried in a first IE; the first IE includes: a reporting configuration configured for reporting of the beam measurement results; and a resource configuration configured to determine a resource to measure beams of the severing cell and at least one candidate cell, in which the resource configuration at least includes a configuration for one candidate cell.

In an embodiment, the configuration information is carried in a second IE and a third IE; the second IE includes: a reporting configuration configured for reporting of the beam measurement results; and a resource configuration for the serving cell configured to determine a resource to be indicated to measure the serving cell; and the third IE includes: a resource configuration for the candidate cell configured to determine a resource to measure the candidate cell.

Embodiments of the present disclosure provide a communication system including: a memory configured to store instructions executable by the processor, and a processor connected to the memory, in which the processor is configured to perform the method for data processing provided by any technical solution described above.

The processor may include various types of storage media that are non-transitory computer storage media capable of continuing to memorize the information stored thereon after the communication device is powered down.

Here, the communication device includes: a UE and a network device, and the network device may be a network device of the aforementioned serving cell.

The processor may be connected to the memory via a bus or the like for reading an executable program stored on the memory, e.g., as the method illustrated in any of FIG. 2, FIG. 4, FIG. 5, FIG. 7, and FIG. 10 to FIG. 14.

Embodiments of the present disclosure provide a communication system including: a user equipment (UE) configured to perform the method for data processing according to any technical solution of the first aspect; and a network device configured to perform the method for data processing according to any technical solution of the second aspect.

The UE may be a terminal device corresponding to the aforementioned communication device. The network device may be a network-side device such as a base station, which may correspond to the network device corresponding to the communication device of the aforementioned embodiment.

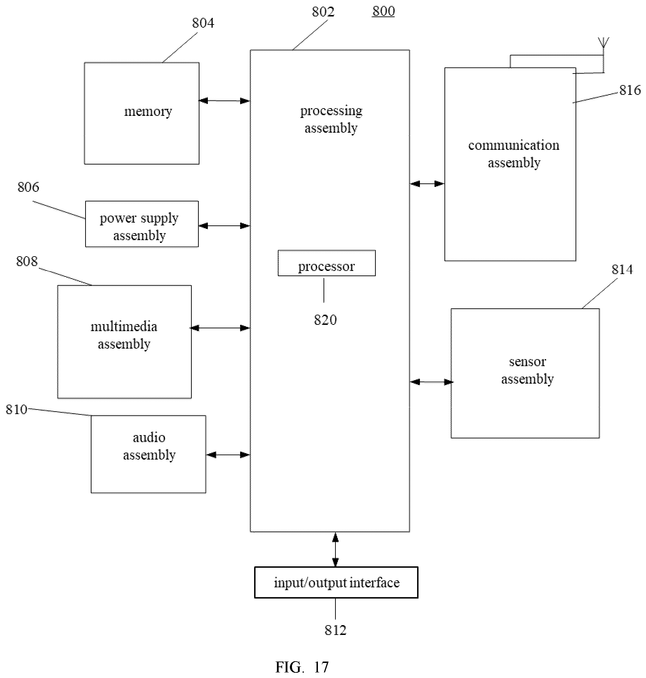

FIG. 17 is a block diagram of a UE 800 illustrated according to an illustrative embodiment. For example, the UE 800 may be a mobile phone, a computer, a digital broadcast terminal, a messaging device, a game console, a tablet device, a medical device, a fitness device, a personal digital assistant, etc.

As illustrated in FIG. 17, the UE 800 may include one or more of the following assemblies: a processing assembly 802, a memory 804, a power supply assembly 806, a multimedia assembly 808, an audio assembly 810, an input/output (I/O) interface 812, a sensor assembly 814, and a communication assembly 816.

The processing assembly 802 generally controls overall operation of the UE 800, such as operations related to display, call, data communication, camera and record. The processing assembly 802 may include one or a plurality of processors 820 to execute instructions, so as to generate all or a part of steps of the above-described method. Additionally, the processing assembly 802 may include one or a plurality of modules, facilitating interaction between the processing assembly 802 and other assemblies. For example, the processing assembly 802 may include a multimedia module, thereby facilitating interaction between the multimedia assembly 808 and the processing assembly 802.

The memory 804 is configured to store various types of data to support the operations of the UE 800. Examples of these data include instructions, contact data, telephone book data, messages, pictures, videos, etc. for any application or method operated on the UE 800. The memory 804 may be realized by any type of volatile, or non-volatile storage devices or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

The power supply assembly 806 provides power for various assemblies of the UE 800. The power supply assembly 806 may include a power management system, one or a plurality of power sources, and other assemblies associated with generating, managing and distributing power for the UE 800.

The multimedia assembly 808 includes a screen providing one output interface between the UE 800 and the user. In some embodiments, the screen may include a liquid crystal display (LCD), and a touch panel (TP). If the screen includes the touch panel, the screen may be realized as a touch screen, so as to receive an input signal from the user. The touch panel includes one or a plurality of touch sensors to sense touch, swipe and gesture on the touch panel. The touch sensor not only can sense the boundary of the touch or swipe action, but also can detect duration time and pressure related to the touch or swipe operation. In some embodiments, the multimedia assembly 808 includes a front camera and/or a rear camera. When the UE 800 is in an operation mode, such as in a photographing or video mode, the front camera and/or the rear camera can receive external multimedia data. Each of the front camera and the rear camera may be a fixed optical lens system or has a focal length and optical zoom capability.

The audio assembly 810 is configured to output and/or input an audio signal. For example, the audio assembly 810 includes a microphone (MIC). The microphone is configured to receive external audio signal when the UE 800 is in the operation mode, such as in a call mode, a record mode and a speech recognition mode. The received audio signal can be further stored in the memory 804 or transmitted via the communication assembly 816. In some embodiments, the audio assembly 810 further includes a speaker configured to output the audio signal.

The input/output (I/O) interface 812 provides interfaces between the processing assembly 802 and peripheral interface modules, and the forgoing peripheral interface module may be a keyboard, a click wheel, a button, etc. The button may include but not limited to a homepage button, a volume button, a start button and a lock button.

The sensor assembly 814 includes one or more sensors configured to provide state assessments of various aspects of UE 800. For example, the sensor assembly 814 may detect on/off state of the UE 800, relative positioning of assemblies. For example, the assemblies may be a display and a keypad of the UE 800. The sensor assembly 814 may further detect positional variation of the UE 800 or one assembly of the UE 800, presence or absence of contact between the user and the UE 800, orientation or acceleration/deceleration of the UE 800 and temperature variation of the UE 800. The sensor assembly 814 may include a proximity sensor configured to detect presence of nearby objects without any physical contact. The sensor assembly 814 may also include an optical sensor, such as a COMS or CCD image sensor configured to use in an imaging application. In some embodiments, the sensor assembly 814 may further include an acceleration sensor, a gyro sensor, a magnetic sensor, a pressure sensor or a temperature sensor.

The communication assembly 816 is configured to facilitate wired or wireless communication between the UE 800 and other devices. The UE 800 may access to wireless network based on communication standard, such as WiFi, 2G, or 3G, or combination thereof. In an illustrative embodiment, the communication assembly 816 receives a broadcast signal or information related to the broadcast from an external broadcast management system. In an illustrative embodiment, the communication assembly 816 further includes a near-field communication (NFC) module to promote short range communication. For example, the NFC module may be realized based on a radio frequency identification (RFID) technology, an infra-red data association (IrDA) technology, an ultra-wide band (UWB) technology, a Bluetooth (BT) technology and other technologies.

In an illustrative embodiment, the UE 800 may be realized by one or more application specific integrated circuits (ASIC), digital signal processors (DSP), digital signal processing equipment (DSPD), programmable logic devices (PLD), field-programmable gate arrays (FPGA), controllers, microcontrollers, microprocessors or other electronic elements configured to execute the above-described method.

In illustrative embodiments, there is also provided a non-transitory computer-readable storage medium including instructions, such as a memory 804 including instructions, and the instructions are executable by the processor 820 of the UE 800 to generate the method described above. For example, the non-transitory computer readable storage medium may be ROM, random access memory (RAM), CD-ROM, magnetic tape, floppy disks, and optical data storage devices, among others.

As illustrated in FIG. 19, an embodiment of the present disclosure illustrates a structure of an access device. For example, the communication device 900 may be provided as a network-side device. The communication device may be a network device of the aforementioned serving cell.

Referring to FIG. 19, the communication device 900 includes a processing assembly 922, which further includes one or more processors, and memory resources represented by a memory 932 for storing instructions, such as an application program, that may be executed by the processing assembly 922. The application program stored in memory 932 may include one or more modules each corresponding to a set of instructions. In addition, the processing assembly 922 is configured to execute instructions to perform any of the aforementioned methods applied to the access device, such as the method illustrated in any of FIG. 2, FIG. 4, FIG. 5, FIG. 7, FIG. 10 through FIG. 14.

The communication device 900 may also include a power supply assembly 926 configured to perform power management of the communication device 900, a wired or wireless network interface 950 configured to connect the communication device 900 to a network, and an input/output (I/O) interface 958. The communication device 900 may operate an operating system based on an operating system stored in the memory 932, such as Windows Server TM, Mac OS XTM, UnixTM, LinuxTM, FreeBSDTM, or the like.

Other embodiments of the present disclosure will readily occur to a person skilled in the art upon consideration of the specification and practice of the invention disclosed herein. The present disclosure is intended to cover any variations, uses, or adaptations of the present disclosure that follow the general principles of the present disclosure and include common knowledge or conventional technical means in the art not disclosed by the present disclosure. The specification and embodiments are to be regarded as illustrative only, with the true scope and spirit of the present disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

**1.** A method for data processing, performed by a user equipment (UE), comprising:
sending beam measurement results of N cells to a network device of a serving cell, wherein the N cells comprise at least one candidate cell, and N is a positive integer.

**2.** The method according to claim 1, wherein sending the beam measurement results of the N cells to the network device of the serving cell comprises:
sending beam measurement results of N*K1 beams to the network device, wherein each cell has K1 beam measurement results, and K1 is a positive integer.

**3.** The method according to claim 1, wherein sending the beam measurement results of the N cells to the network device of the serving cell comprises:
selecting K2 beam measurement results from all the beam measurement results of the N cells, and sending the K2 beam measurement results to the network device, wherein K2 is a positive integer.

**4.** The method according to claim 3, wherein the K2 beam measurement results are K2 best beam measurement results from all the beam measurement results of the N cells.

**5.** The method according to any one of claims 1 to 4, wherein sending the beam measurement results of the N cells to the network device of the serving cell comprises:
sending a measurement report to the network device, wherein the measurement report comprises the beam measurement results of the N cells.

**6.** The method according to claim 5, wherein the measurement report comprises:
a measurement value being a best measurement beam measurement result of one or more cells of the N cells; and
a differential value being a difference between the best measurement beam measurement result of the one or more cells and other beam measurement results of the N cells.

**7.** The method according to claim 5, wherein the measurement report comprises a first portion and a second portion;
the first portion comprises a best beam measurement result of each cell of the N cells; and
the second portion comprises a beam measurement result other than the best beam measurement result of each cell of the N cells.

**8.** The method according to claim 7, wherein the first portion comprises:
a measurement value of a best beam measurement result of the one or more cells of the N cells and a differential value, wherein
the differential value is a difference between the measurement value of the best beam measurement result of the one or more cells and the remaining beam measurement results of the N cells.

**9.** The method according to claim 7, wherein the first portion comprises a measurement value.

**10.** The method according to claim 7, wherein the second portion comprises a measurement value of a beam measurement result other than the best beam measurement result of each cell of the N cells and a differential value, wherein
the differential value is a difference between the beam measurement result other than the best beam measurement result of each cell and remaining beam measurement results of the N cells.

**11.** The method according to claim 7, wherein the second portion comprises a measurement value.

**12.** The method according to claim 7, wherein the first portion further comprises:
a preset identifier configured to indicate whether the second portion is present or not.

**13.** The method according to any one of claims 5 to 12, wherein the measurement report comprises:
cell identifiers of the N cells.

**14.** The method according to any one of claims 5 to 12, wherein the beam measurement results of the N cells are set in the measurement report in accordance with a cell ordering of a network preconfiguration.

**15.** The method according to any one of claims 1 to 14, wherein sending the beam measurement results of the N cells to the network device of the serving cell comprises:
sending the beam measurement results of the N cells to the network device according to configuration information.

**16.** The method according to claim 15, further comprising:
receiving the configuration information sent by the serving cell.

**17.** The method according to claim 15 or 16, wherein the configuration information is carried in a first information element (IE); and
the first IE comprises:
a reporting configuration configured for reporting of the beam measurement results; and
a resource configuration configured to determine a resource to measure beams of the severing cell and the at least one candidate cell, wherein the resource configuration at least comprises a configuration for one candidate cell.

**18.** The method according to claim 15 or 16, wherein the configuration information is carried in a second IE and a third IE;
the second IE comprises:
a reporting configuration configured for reporting of the beam measurement results; and
a resource configuration for the serving cell configured to determine a resource to be indicated to measure the serving cell; and
the third IE comprises:
a resource configuration for the candidate cell configured to determine a resource to measure the candidate cell.

**19.** A method for data processing, performed by a network device of a serving cell, comprising:
receiving beam measurement results of N cells sent by a user equipment (UE), wherein the N cells comprise at least one candidate cell, and N is a positive integer.

**20.** The method according to claim 19, wherein receiving the beam measurement results of the N cells sent by the user equipment (UE) comprises:
receiving beam measurement results of N*K1 beams sent by the UE, wherein each cell has K1 beam measurement results, and K1 is a positive integer.

**21.** The method according to claim 20, wherein receiving the beam measurement results of the N cells sent by the user equipment (UE) comprises:
receiving K2 beam measurement results sent by the UE, wherein K2 is a positive integer.

**22.** The method according to claim 21, wherein the K2 beam measurement results are K2 best beam measurement results from all the beam measurement results of the N cells.

**23.** The method according to any one of claims 18 to 21, wherein receiving the beam measurement results of the N cells sent by the user equipment (UE) comprises:
receiving a measurement report sent by the UE, wherein the measurement report comprises the beam measurement results of the N cells.

**24.** The method according to claim 23, wherein the measurement report comprises:
a measurement value being a best measurement beam measurement result of one or more cells of the N cells; and
a differential value being a difference between the best measurement beam measurement result of the one or more cells and other beam measurement results of the N cells.

**25.** The method according to claim 23, wherein the measurement report comprises a first portion and a second portion;
the first portion comprises a best beam measurement result of each cell of the N cells; and
the second portion comprises a beam measurement result other than the best beam measurement result of each cell of the N cells.

**26.** The method according to claim 25, wherein the first portion comprises:
a measurement value of a best beam measurement result of the one or more cells of the N cells and a differential value, wherein
the differential value is a difference between the measurement value of the best beam measurement result of the one or more cells and remaining beam measurement results of the N cells.

**25.** The method according to claim 23, wherein the first portion comprises a measurement value.

**26.** The method according to claim 23, wherein the second portion comprises:
a measurement value of a beam measurement result other than the best beam measurement result of each cell of the N cells and a differential value, wherein
the differential value is a difference between the beam measurement result other than the best beam measurement result of each cell and remaining beam measurement results of the N cells.

**27.** The method according to claim 23, wherein the second portion comprises a measurement value.

**28.** The method according to claim 23, wherein the first portion further comprises:
a preset identifier configured to indicate whether the second portion is present or not.

**29.** The method according to any one of claims 21 to 28, wherein the measurement report comprises:
cell identifiers of the N cells.

**30.** The method according to any one of claims 21 to 29, wherein:
the beam measurement results of the N cells are set in the measurement report in accordance with a cell ordering.

**31.** The method according to any one of claims 18 to 30, further comprising:
sending configuration information to the UE, wherein the configuration information is configured for a beam measurement of the UE and reporting of the beam measurement results.
31. The method according to claim 30, wherein the configuration information is carried in a first information element (IE); and
the first IE comprises:
a reporting configuration configured for reporting of the beam measurement results; and
a resource configuration configured to determine a resource to measure beams of the severing cell and the at least one candidate cell, wherein the resource configuration at least comprises a configuration for one candidate cell.

**32.** The method according to claim 31, wherein the configuration information is carried in a second IE and a third IE;
the second IE comprises:
a reporting configuration configured for reporting of the beam measurement results; and
a resource configuration for the serving cell configured to determine a resource to be indicated to measure the serving cell; and
the third IE comprises:
a resource configuration for the candidate cell configured to determine a resource to measure the candidate cell.

**33.** An apparatus for data processing, comprising:
a transmitting module configured to send beam measurement results of N cells to a network device of a serving cell, wherein the N cells comprise at least one candidate cell, and N is a positive integer.

**34.** An apparatus for data processing, comprising:
a receiving module configured to receive beam measurement results of N cells sent by a user equipment (UE), wherein the N cells comprise at least one candidate cell, and N is a positive integer.

**35.** A communication device, comprising: a processor, a transceiver, a memory and an executable program stored in the memory and executable by the processor, wherein the processor, when executing the executable program, performs the method according to any one of claims 1 to 17 or 18 to 32.

**36.** A computer storage medium storing an executable program that when executed by a processor, causes the method according to any one of claims 1 to 17 or 18 to 32 to be implemented.

**37.** A communication system, comprising:
a user equipment configured to perform the method for data processing according to any one of claims 1 to 17; and
a network device configured to perform the method for data processing according to any one of claims 18 to 32.
